Europäisches Patentamt

European Patent Office

Office européen des brevets

(11) Veröffentlichungsnummer: **0 223 959**
**A2**

(12) # EUROPÄISCHE PATENTANMELDUNG

(21) Anmeldenummer: 86113067.2

(22) Anmeldetag: 23.09.86

(51) Int. Cl.⁴: **C 04 B 38/00**

(30) Priorität: 23.11.85 DE 3541444

(43) Veröffentlichungstag der Anmeldung:
03.06.87 Patentblatt 87/23

(84) Benannte Vertragsstaaten:
AT DE FR GB IT NL SE

(71) Anmelder: MAN Technologie GmbH
Dachauer Strasse 667
D-8000 München 50(DE)

(72) Erfinder: Laussermair, Friedrich, Dr.Dr.
Amselweg 6
D-8033 Krailling(DE)

(72) Erfinder: Bulang, Wolfgang, Dr. rer. nat.
Lavendelweg 6
D-8031 Eichenau(DE)

(72) Erfinder: Erben, Edwin
Eininger Strasse 10e
D-8000 München 50(DE)

(54) Poröser, temperaturbeständiger Körper und Verfahren zu dessen Herstellung.

(57) Zur Verbesserung von bekannten Herstellmethoden zur
Erzeugung von porösen, temperaturbeständigen Gegenständen unter Verwendung von elastischen Schaumkörpern als
Substrat wird vorgeschlagen, dem im allgemeinen pulverförmigen Material für den porösen Gegenstand Partikel
und/oder Whisker beizumischen, die dem Endprodukt eine
höhere mechanische Stabilität verleihen und gleichzeitig die
innere Oberfläche der Porenwandungen vergrößern. Die so
hergestellten Gegenstände sind insbesondere als Filterkörper für Partikel aus Abgasen, insbesondere Dieselabgasen geeignet.

Fig. 4

0223959

M.A.N. MASCHINENFABRIK AUGSBURG-NÜRNBERG
Aktiengesellschaft
gü/sd

München, 21. November 1985

## Poröser, temperaturbeständiger Körper
## und Verfahren zu dessen Herstellung

Die Erfindung bezieht sich auf einen porösen Körper und ein Verfahren zur Herstellung von porösen Körpern aus einem pulverförmigen, hochtemperaturfesten Material, insbesondere zum Ausfiltern von Partikeln aus Gasen.

Hochtemperaturfeste, poröse Körper finden vielseitige Anwendungen. Aus der EP 0 050 340 ist die Verwendung von derartigen Körpern als Partikelfilter aus Keramik für Dieselabgase bekannt. Zur Herstellung des keramischen, porösen Körpers wird ein Träger aus Polyurethanschaum verwendet. Mit diesem Schaumkörper wird Keramikschlicker aufgenommen derart, daß unter Beibehaltung der Hohlräume das Keramikmaterial sich an die Porenwände des Schaumkörpers ansetzt. Nach dem Trocknen des Schlickers im Schaumkörper wird dieser durch höhere Temperatureinwirkung entfernt, so daß ein poröser Keramikkörper zurückbleibt.

Bei manchen Einsätzen von porösen Körpern z.B. als Filter, wird eine möglichst große Oberfläche innerhalb der Porenstruktur angestrebt. Dieses führt zu möglichst kleinporigen Körpern, bei denen die Porenwände extrem

7.2341

dünn ausfallen. Es hat sich dabei gezeigt, daß derartige Körper aufgrund des spröden Materials leicht beschädigt bzw. zerstört werden können.

Es ist aus DE-OS 30 43 997 bekannt, einen aus Keramikpulver hergestellten porösen Filterkörper mit Fasern aus einem Keramikmaterial zu durchsetzen. Mit den Fasern wird eine höhere mechanische Stabilität erreicht, indem sie stützend auf die dünnen Porenwände wirken, womit gleichzeitig eine höhere Rauhigkeit der Porenwände und damit eine Vergrößerung der inneren Oberfläche erreicht wird. Dieses hat insbesondere bei als Partikelfilter verwendeten porösen Körpern eine große Bedeutung, indem die Partikel an den rauhen Wänden besser zurückgehalten werden können und damit eine verbesserte Filtrierwirkung erreicht werden kann.

Der Erfindung liegt die Aufgabe zugrunde, einen Körper und ein Verfahren der eingangs genannten Art zu schaffen, mit dem poröse, hochtemperaturbeständige Körper höherer Bruchfestigkeit auf anderem Wege hergestellt werden können.

Die Aufgabe wird erfindungsgemäß mit den im Anspruch 1 gekennzeichneten porösen Körper gelöst, der durch ein Verfahren gemäß Anspruch 4 hergestellt werden kann.

Es konnte festgestellt werden, daß die Porenoberfläche durch Partikeln oder Whisker, deren Größe deutlich größer ist, als die des pulverigen Grundmaterials, das durchschnittlich eine Korngröße von etwa 20 μm hat, eine die Filterung von Partikeln aus Gasen begünstigende Wirkung haben. Die Porenwand erhält eine erhöhte Rauhigkeit.

7.2341
21.11.1985

0223959

Bei der Verwendung von Partikeln oder Whisker aus einem anderen Material als der des Grundwerkstoffes ergibt sich ein weiterer Vorteil. Aufgrund unterschiedlicher Wärmedehnungen zwischen Grundmaterial und Partikeln können Mikrorisse entstehen, die die Ausbreitung von Bruchrissen hemmen und damit die Bruchfestigkeit des Filters, der im allgemeinen aus sprödem Keramikmaterial besteht, erhöhen. Hierfür eignen sich insbesondere Partikeln oder Whisker aus $ZrO_2$, $HfO_2$ oder BN, die aufgrund ihrer Phasenänderungen bei Temperaturänderungen bis zu einer 5-fachen Volumenänderung erfahren. Durch die Verwendung dieser Partikeln kann daher die thermische und mechanische Stabilität aufgrund der erhöhten Zähigkeit erhöht werden.

Ein mit Partikeln oder Whiskern versetzter Filter kann mit bekannten Verfahren hergestellt werden, wobei die Partikeln oder Whisker mit dem pulverförmigen Grundmaterial vermischt, verarbeitet und in einem Schaumkörper oder Schwamm aufgenommen, darin getrocknet und abschließend gebrannt werden.

Die Partikeln und Whisker sind in der Größenordnung von 50 - 100 µm, sie werden im allgemeinen alle Größen innerhalb dieses Bereiches einnehmen.

Bei der Verwendung des porösen Körpers als Dieselpartikel- oder Rußfilter ist es vorteilhaft, wenn als Material Keramikpulver, z.B. Aluminiumtitanat, Mullit, $AL_2O_3$, Cordierit oder deren Mischung mit Partikeln aus $ZrO_2$, $HfO_2$ oder BN verwendet wird.

7.2341
21.11.1985

-4-

Gemäß einer weiteren Ausgestaltung der Erfindung wird der bei der Herstellung des porösen Körpers verwendete Stützkörper aus Schaum- oder Schwammteilen zusammengesetzt, wobei die Teile oder Stücke besonderer Formgebung und/oder unterschiedlicher Porosität sein können. Diese werden getrennt mit der Suspension getränkt und gleich anschließend zur Bildung der endgültigen Formgebung zusammengesetzt, so daß die noch feuchte Masse sich miteinander verbinden kann und nach dem Herausbrennen des Stützkörpers einen einheitlichen porösen Körper bildet.

Hierdurch ist es möglich, eine möglichst homogene Verteilung des Materials bzw. der Partikeln oder Whisker im gesamten Körper zu erreichen.

Außerdem ist es damit möglich, poröse Körper jeder Formgebung sowie unterschiedlicher Porösität innerhalb eines selben Gegenstandes herzustellen, ohne sie aus mehreren porösen Körpern zusammensetzen zu müssen.

Fig. 1 und 2 zeigen je ein Ausführungsbeispiel zur Herstellung von porösen Körpern hoher Temperaturbeständigkeit.

Fig. 3 zeigt einen Querschnitt des nach Fig. 2 hergestellten Gegenstandes und

Fig. 4 einen Auschnitt aus Fig. 3.

Für die Herstellung von temperaturbeständigen, porösen Gegenständen aus spröden Materialien, wie z.B. Keramik oder anderen temperaturbeständigen Materialien wird ein Stützkörper verwendet, der aus einem vorzugweise elastischen Schaumstoff wie Polyurethan oder einem Schwamm besteht. Dieser Stützkörper wird in der Form zugeschnitten,

7.2341
21.11.1985

wie das Endprodukt, nämlich der poröse Körper in seiner äußeren Kontur geformt sein soll, jedoch größer dimensioniert, weil der Keramikkörper im Brennvorgang schrumpft.

Das Grundmaterial, mit dem der poröse Körper hergestellt werden soll, wird in Pulverform zusammen mit den Partikeln und/oder Whiskern mit einer Flüssigkeit zu einer flüssigen Masse oder Suspension vorbereitet. Der Stützkörper wird in dieser Masse eingetaucht und je nach Zusammensetzung der Masse und Eigenschaft des Stützkörpers in der Masse geknetet oder direkt herausgezogen und unter Umständen bis zu einem gewissen Maß ausgewrungen, um überschüssige Masse aus den Poren herauszudrücken.

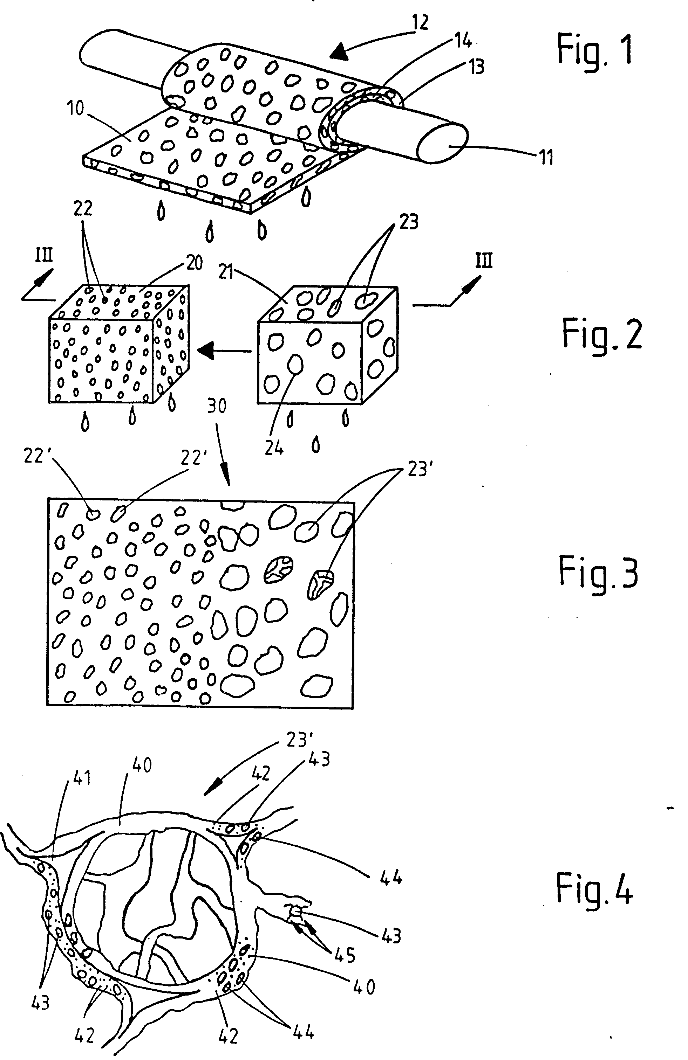

Fig. 1 zeigt eine derartig getränkte, als Stützkörper dienende Schaummatte 10, die zur Herstellung eines porösen Rohres um einen Kern 11 gewickelt wird. Die feuchte Masse benachbarter Lagen des Wickelkörpers 12 fließen dabei ineinander, so daß eine Kontinuität der Masse innerhalb des Wickelkörpers 12 sichergestellt ist.

Nach dem Trocknen der Masse wird der Wickelkörper 12 zur Erhärtung des Massenmaterials gebrannt. Dabei wird das nichttemperaturbeständige Material des Stützkörpers 10 herausgebrannt, so daß ein Rohr mit poröser Wandung aus dem temperaturbeständigen Material übrig bleibt.

Will man einen Körper unterschiedlicher Porösität herstellen, so wie gemäß Fig. 2 der Stützkörper aus entsprechenden Schaumteilen 20, 21 zusammengesetzt ist, die Poren 22 bzw. 23 unterschiedlicher Größen haben. Die Schaumteile 20 und 21 werden getrennt in die Masse eingetaucht und in noch nassem Zustand der Masse in Pfeilrichtung einen größeren Quader bildend in Verbindung gebracht und zum Trocknen bzw. Brennen bereitgestellt.

7.2341
21.11.1985

-6-

Das Endprodukt ergibt einen porösen Quader, dessen Querschnitt in Fig. 3 gezeigt ist. Der Körper 30 weist in der einen Hälfte Poren 22 kleineren und in der anderen Hälfte Poren 23 größeren Durchmesser auf. Das Verhältnis dieser Porengröße entspricht dem der Stützkörper 20 bzw. 21.

Die Aufteilung des Stützkörpers in mehrere Schaumteile 20, 21 hat auch die Wirkung, daß bei der Herstellung von sehr voluminösen porösen Körpern die Gewähr geleistet ist, daß die Struktur auch des innersten Bereiches des Körpers der des äußeren Bereiches entspricht. Mit kleinen Stützkörpern lassen sich leichter reproduzierbare Ergebnisse erreichen. Es muß nämlich darauf geachtet werden, daß die Ablagerung des Materials und der Partikeln bzw. Whisker auf den Porenwänden des Stützkörpers homogen und gleich gehalten werden kann, um Gegenstände homogener und gewünschter Porösität erhalten zu können.

In Fig. 4 ist der Querschnitt durch eine Pore 23 mit den Porenwandungen 40 vergrößert dargestellt. Die Porenwandungen 40 bestehen aus dem Grundmaterial 42 und den Whiskern 44. Durch das Ausbrennen der Porenwandung 24 vom Stützkörper 10, 20 bzw. 21 verbleiben in den Wandungen 40 des gebrannten Körpers 30 Hohlräume 41. Durch die Partikeln oder Whisker erhält die Wandung 40 eine relativ rauhe Oberfläche, die für Filterzwecke eine verbesserte Wirkung zeigt.

In einem Beispiel zur Herstellung von Schaumkeramik-Filter wurde als Grundmaterial ein keramischer Werkstoff mit 51 Gew% $SiO_2$, 35 Gew% $Al_2O_3$ und 14Gew% MgO verwendet. Das bis auf durchschnittlich 2o µm Korngröße gemahlene Grundmaterial wurde mit 50 -100 µm großen Partikeln aus $ZrO_2$

7.2341
21.11.1985

vermischt. Dieses Gemisch wurde mit einer wässrigen, 4%igen Lösung von Polyvinylalkohol in eine Suspension überführt.

Ein quaderförmiger Stützkörper (12 x 8 x 4 cm) aus Polyurethanschaum (durchschnittlicher Porendurchmesser etwa 200 μm) wurde in dem Keramik-Pulver-Faser-Schlicker solange gedrückt und geknetet, bis eine Menge des Schlickers, die dem Volumen des Stützkörpers gleich ist, im Stützkörper aufgenommen wurde. Der getränkte Stützkörper wurde dann bei 60°C gelagert und anschließend einige Stunden bei 110°C getrocknet.

In einem Ofen wird der getrocknete Körper zunächst auf 200°C bis 250°C erhitzt, um den Schaumstoff zu zersetzen und dann auf 600°C bis 800°C gebracht, um die Pyrolysereste zu entfernen, das im Keramikmaterial gebundene Konstitutionswasser zu entfernen und einen Rohbrand des zurückbleibenden Schaum-Keramikkörpers durchzuführen. Der Grünling wurde schließlich bei etwa 1300°C gesintert.

Es hat sich gezeigt, daß der so hergestellte Filter eine Tiefenfilterwirkung hat, indem über die gesamten Porenwandungen, auch im Inneren des Filterkörpers abgelagerte Rußpartikeln feststellbar waren. Gegenüber Filterelementen ohne Partikeln oder Whisker und sonst gleicher Form und Struktur konnte eine höhere zurückgehaltende Rußmenge bei gleichen Betriebsbedingungen sowie eine verbesserte mechanische Festigkeit des Filterelementes festgestellt werden.

Die Höhe mechanischer und auch thermischer Festigkeit ist u. a. darauf zurückzuführen, daß die $ZrO_2$-Partikeln bei Temperaturänderungen Phasenänderungen erfahren, die mit einer Volumenänderung der Partikeln 43 begleitet ist. Beim Abkühlen des Körpers 30 nach dem Sinterprozeß

7.2341
21.11.1985

auf Raumtemperatur dehnen sich die ZnO$_2$-Partikeln 43 aus und es bilden sich dabei Mikrorisse 45 im Grundmaterial 42. Dadurch kann das aufgrund der Temperaturbehandlung aufgebaute Spannungsfeld teilweise abgebaut und die Ausbreitung von Bruchrissen zum Teil verhindert werden.

Ähnlicher Effekt wird mit Partikeln oder Whiskern aus anderen Materialien, wie HfO$_2$, BN erreicht.

7.2341
21.11.1985

Neue Patentansprüche

1. Poröser Körper, insbesondere Partikelfilter aus temperaturbeständigem Material, in dem Körper unterschiedlicher Korngröße enthalten sind, dadurch gekennzeichnet, daß der Körper aus einem feinen pulverförmigen Grundmaterial (42) besteht, in dem bis zu 100 $\mu$m große Partikeln (42) und/oder Whisker (44) eingebettet sind.

2. Körper nach Anspruch 1, dadurch gekennzeichnet, daß das Grundmaterial (42) aus einem Werkstoff besteht, während die Partikeln (43) oder Whisker (44) aus einem anderen Werkstoff bestehen.

3. Körper nach Anspruch 1 oder 2, dadurch gekennzeichnet, daß die Partikeln (43) aus $ZrO_2$, $HfO_2$ oder BN bestehen.

4. Körper nach einem der vorhergehenden Ansprüche, dadurch gekennzeichnet, daß die Whisker (44) aus $ZrO_2$, $Al_2O_3$, SiC oder $Si_3N_4$ bestehen.

0223959

Fig. 1

Fig.2

Fig.3

Fig.4